# EUROPEAN PATENT APPLICATION

(11) **EP 4 814 361 A1**
(43) Date of publication of application: **30.09.2026**
(21) Application number: 25166466.0
(22) Date of filing: 26.03.2025
(51) Int. Cl.: F16N 3/12

(54) **HANDHELD POWERED LUBRICATION DEVICE**

(71) Applicant: Techtronic Cordless GP, Anderson, SC 29621 (US)
(72) Inventor: CHEN, Ji Fa, Anderson, SC (US); LI, Yong Min, Anderson, SC (US); CHEN, Jing Yao, Anderson, SC (US); ZHANG, Bao An, Anderson, SC (US); LI, Zong Fen, Anderson, SC (US)
(74) Representative: Meissner Bolte Partnerschaft mbB

(57) **Abstract**

The device comprises a housing for receiving an inserted lubricant cartridge and a power source. A pump is configured for coupling with the inserted lubricant cartridge and driven by an electric motor for expelling lubricant therefrom. A controller provides current to the electric motor from the power source upon actuation of a switch by an operator for driving the pump to expel lubricant from the inserted lubricant cartridge. The housing has an adaptor assembly comprising a frame with at least one pair of displaceable clamping holders supported thereon for retaining at least an inserted lubricant cartridge of a first diameter or an inserted lubricant cartridge of a second and different diameter.

## Description

### FIELD OF THE DISCLOSURE

The present disclosure relates to a handheld lubricant dispensing device (also known as a grease gun) and more particularly a powered grease gun/handheld lubricant dispensing device.

### BACKGROUND OF THE DISCLOSURE

Grease is essential for lubrication of bearings and other components of vehicles ranging from lawn equipment, farming equipment and various industrial machinery for continued operation. As is known by persons skilled in the art, grease is viscous and is retained on the surface of the component to which it is applied longer than oil, a property which makes it more difficult to control during application.

Grease is typically applied to these machines using a grease gun to dispense grease through a hose via a grease fitting coupler. Grease may be urged from the cartridge and extruded from the hose using a manually actuated lever handle grease gun or a manually activated pistol grip pump grease gun or similar. Alternatively, pneumatic grease guns or battery powered pumps of a grease gun may be used to urge the grease out of the cartridge for dispensing via the hose.

It is often desirable to dispense a predetermined amount of grease from the cartridge in some applications. Many manually operated grease guns and electrically operated grease guns leave it up to the operator to guess how much grease has been dispensed in an application.

It would be appreciated that it is difficult for an operator of such a grease gun to judge whether sufficient grease has been applied, leading to under or over lubrication, as well as potentially a lack of knowledge of how much grease is left in the grease gun after one use.

Furthermore, grease is manufactured by different manufacturers in various diameter cartridges, which means that multiple grease guns to accommodate the various cartridges that are accumulated may end up being required.

It is an object of the present disclosure to to address or at least partially ameliorate some of the above problems of the above devices.

### SUMMARY OF THE DISCLOSURE

Features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims.

In accordance with a first aspect of the present disclosure, there is provided a handheld lubricant dispensing device, it may comprise: a housing having a power source and configured for retaining an inserted lubricant cartridge, a pump configured for coupling with the inserted lubricant cartridge and driven by an electric motor for expelling lubricant therefrom, a controller for providing current to the electric motor from the power source upon actuation of a switch by an operator for driving the pump to expel lubricant from the inserted lubricant cartridge, the housing may retain an inserted cartridge via an adaptor assembly comprising a frame with at least one pair of displaceable clamping holders supported thereon a barrel containing at least an inserted lubricant cartridge of a first diameter or an inserted lubricant cartridge of a second and different diameter.

The at least one pair of displaceable clamping holders may be urged by one or more biasing means against the barrel upon insertion thereof into the housing.

The one or more biasing means could be for example compressible springs which are received in corresponding bosses extending radially outwardly from the displaceable clamping bodies.

The power source received by the housing may be releasably coupled thereto and may comprise one or more battery cells.

The expansible adaptor assembly could be adapted to receive barrel with outer diameter between 57mm and 70mm.

The barrel may contain inserted lubricant cartridges with diameters between 50mm and 61mm, optionally 51mm to 61mm, and optionally 52mm and 56mm.

The expansible adaptor assembly may be adapted for receiving a barrel dimensioned to retain a 400g lubricant cartridges having a first diameter or a barrel dimensioned to retain a 500g lubricant cartridges having a second and larger diameter.

The adaptor assembly may include at least one magnet disposed on or in the clamping holder and at least one Hall sensor disposed on the frame for providing a Hall signal indicative of movement by an inserted lubricant cartridge of the magnet disposed on or in the displaceable clamping holder relative to the frame.

The Hall sensor board may be fixed inside the frame, and the magnet may be received in a groove on the displaceable clamping holder.

The at least one Hall sensor may be coupled to the controller for determining the cartridge diameter.

The above-described handheld lubricant dispensing device may comprise a crank slider mechanism, at least a further Hall sensor may be disposed so as to receive the signal generated by the crank slider mechanism upon rotation thereof.

The above-described handheld lubricant dispensing device may further comprise a display coupled to the processor for indicating any one or more of the power or current remaining of a power source coupled thereto, the volume of lubricant remaining in the cartridge after operation of the pump, the volume of lubrication expelled and/or the speed of pump operation.

The display may include one or more user actuable controls mounted adjacent thereto, said controls may receive operator input for communication to the processor for work mode switching, volume setting of lubrication to be expelled and/or speed changing of pump operation.

The work mode may be selected from a mode in which grease is expelled upon manual actuation of a trigger, a continuously expelling mode and an expelling mode which is configured to cease once a predetermined volume of lubricant has been dispensed.

In accordance with a second aspect of the present disclosure, there is provided an adaptor assembly configured for retention within a housing of a handheld lubricant dispensing device, the adaptor assembly may be a frame with at least one pair of displaceable clamping holders supported thereon a barrel for containing at least an inserted lubricant cartridge of a first diameter or an inserted lubricant cartridge of a second and different diameter.

The at least one pair of displaceable clamping holders may be urged by one or more biasing means against the barrel upon insertion thereof into the housing.

The one or more biasing means could be for example compressible springs which are received in corresponding bosses which extend radially outwardly from the displaceable clamping bodies.

The adaptor assembly may be configured for receiving barrel with outer diameter between 57mm and 70mm.

The barrel may contain inserted lubricant cartridges with diameters between 50mm and 61mm, optionally 51mm to 61mm, and optionally 52mm and 56mm.

The above adaptor assembly may be adapted for receiving a barrel dimensioned for receiving 400g lubricant cartridges having a first diameter or a barrel dimensioned for receiving 500g lubricant cartridges having a second and larger diameter.

In an exemplary embodiment, the first diameter may be 51mm and the second diameter may be 61mm.

The adaptor assembly may have at least one magnet disposed on or in the clamping holder and at least one Hall sensor disposed on the frame for providing a Hall signal, such that said Hall signal may indicate movement of the magnet disposed on or in the displaceable clamping holder relative to the frame by an inserted lubricant cartridge.

The at least one Hall sensor may be coupled to the controller for determining the cartridge diameter.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended Figures. Understanding that these Figures depict only exemplary embodiments of the disclosure and are not therefore to be considered to be limiting of its scope, the principles herein are described and explained with additional specificity and detail through the use of the accompanying Figures.

Preferred embodiments of the present disclosure will be explained in further detail below by way of examples and with reference to the accompanying Figures, in which:-
FIG 1A depicts a perspective view of an exemplary handheld lubrication device according to an embodiment of the present disclosure.
FIG 1B depicts an exploded perspective view of the main components of the exemplary handheld lubrication device depicted in Fig 1A.
FIG 2A depicts a cross section view depicting an exemplary adaptor assembly *in situ* in the housing of the handheld lubrication device of Fig 1A and Fig 1B.
FIG 2B depicts a perspective view of the adaptor assembly of Fig 2A in an assembled state.
Fig 2C depicts an exploded perspective view of the adaptor assembly of Fig 2A in a disassembled state.
Fig 3A depicts an exemplary schematic diagram of the connections between the major components of the handheld lubrication device depicted in Figs 1A and Fig 1B.
Fig 3B depicts a representation of an embodiment of the display of the handheld lubrication device depicted in Figs 1A and Fig 1B.

### DETAILED DESCRIPTION OF THE PREFERRED EMBODIMENTS

Various embodiments of the disclosure are discussed in detail below. While specific implementations are discussed, it should be understood that this is done for illustration purposes only. A person skilled in the relevant art will recognize that other components and configurations may be used without departing from the spirit and scope of the disclosure.

The disclosed technology addresses the need in the art for a handheld lubricant dispensing device or grease gun to be able to operate with grease cartridges of different diameters.

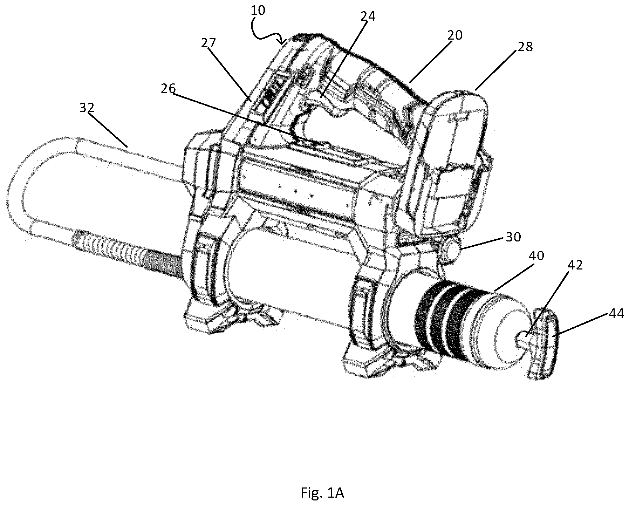

Referring to Figure 1A, there is depicted an exemplary perspective view of a handheld powered lubrication device 10 according to an embodiment of the present disclosure.

As depicted, the handheld lubrication device 10 comprises a housing 20 which includes a trigger 24 which may be depressed by a user to actuate the dispensing of grease from the device. A speed selection switch 26 may be used to control the speed at which the lubricant is dispensed upon user actuation of the trigger. A rotary knob 27 may permit the user to control the number of squirts of lubricant per trigger actuation dispensed.

For portability and to enhance the ease of operation a battery comprising one or more cells (not shown) may be attached to the receiving portion 28 of the housing. Alternatively, a complementary fitting for corded operation could also be attached at this point without departing from the scope of the present disclosure.

Lubricant is dispensed from the nozzle 30 which is attached to the head of the lubrication device 10 by a flexible hose 32 upon user actuation of the trigger 24 operating the motor (not shown). Preferably, the lubricant is contained in a cartridge (not shown) supported in the barrel 40 and retained by the housing 20.

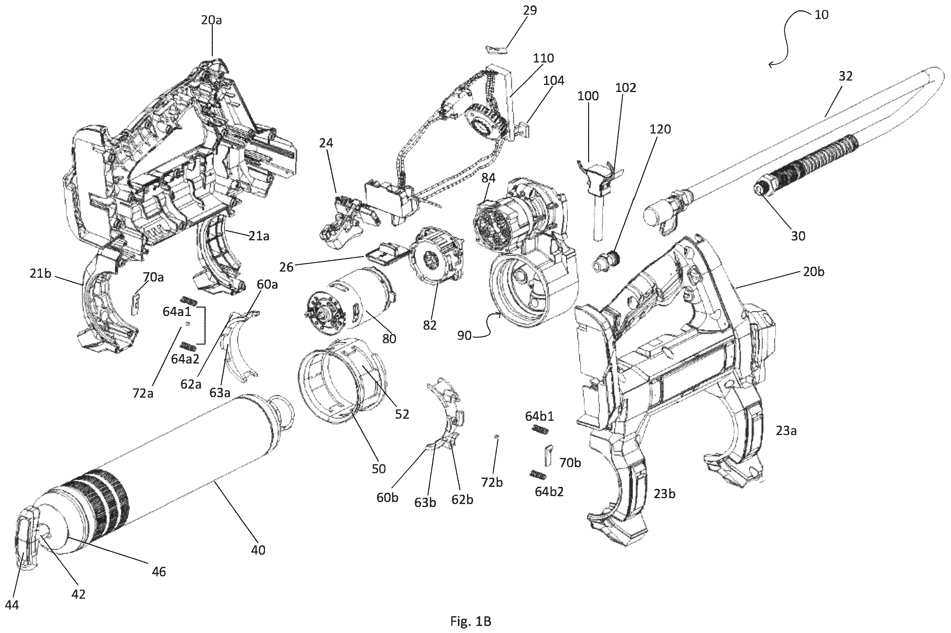

As is common in the art, a follower rod 42 and a follower handle 44 are urged by the user against the action of the spring (not shown) inside the barrel 40 against the base of the cartridge. As the lubricant is used up, this assists in pushing the lubricant toward the front of the cartridge for ease of dispensing, and the follower rod 42 and the follower handle 44 rests in positions as shown in Fig 1.

Referring to Figure 1B, there is depicted an exploded perspective view of many of the parts of the dispensing device 10 depicted in figure 1A. As depicted the housing is formed by complementary clamshell portions 20a, 20b and receives the various components depicted in Figure 1B.

Housing clamshell portion 20a includes front barrel support 21a, rear barrel support 21b, and housing clamshell portion 20b includes complementary front barrel support 23a and rear barrel support 23b. The barrel supports together define two receiving apertures in which the barrel 40 and cartridge contained inside the barrel 40 are supported in the housing.

A user actuable trigger switch 24, user actuable speed selection switch 26 and indicating LED 29 are located on the upper faces of the handle portion of the housing as shown. These images are in communication with the main control board 110 controlling the operation of the device 10.

Figure 1B also depicts the follower rod 42, and follower handle 44 is shown. Movement of the follower handle and follower rod into the barrel by pressure applied by the user in turn urges the base of the container and hence the lubricant contained therein against the head 90 of the device.

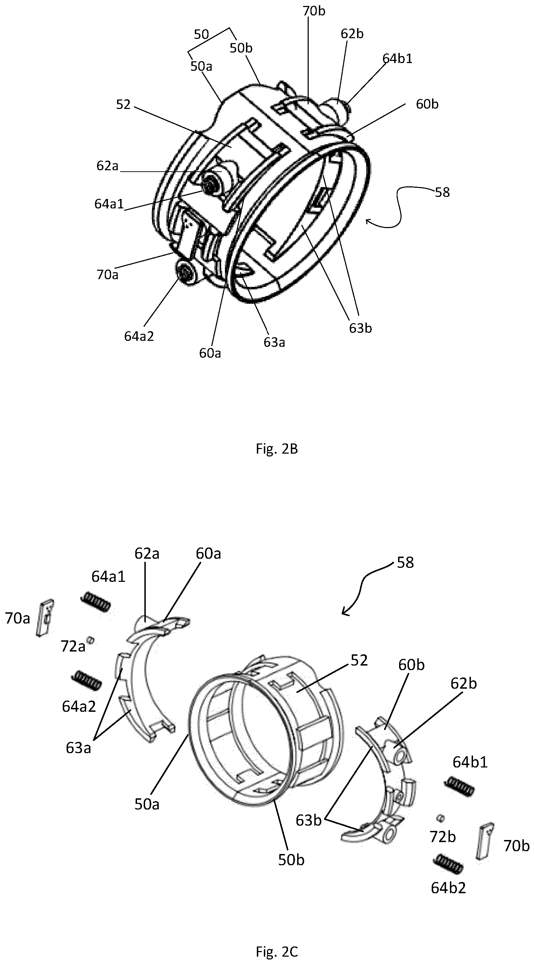

As depicted, the barrel 40 is received in an adaptor assembly (depicted in Fig 2B in an assembled state) which has a frame 50. The frame 50 may be made from complementary half circular or other shapes without departing from the scope of the present disclosure.

As depicted, the frame 50 of the adaptor assembly includes slots 52 for receiving clamping holders 60a, 60b. The clamping holders 60a and 60b are urged into engagement with the barrel by resilient biasing means (e.g. springs) 64a1, 64a2, 64b1, 64b2. Resilient biasing means 64a1, 64a2, 64b1, 64b2 are supported on the rear housing supports 21b, 23b and bear against bosses 62a, 62b extending radially outwardly from the clamping holders 60a, 60b.

Advantageously, the clamping holders 60a, 60b may include a chamfered front end 63a, 63b to facilitate the insertion of the barrel of greater diameter into the clamping holders 60a, 60b, see Fig. 2B and 2C. In one embodiment, the chamfered front end 63a, 63b contacts a larger diameter barrel (e.g. which receives a 500g lubricant cartridge) and is displaced radially outward during the insertion of the barrel.

The chamfered front end 63a, 63b may not be contacted by a barrel for a cartridge of smaller diameter, for example 400g lubricant cartridges, as the clamping holders 60a, 60b are not displaced radially outward direction by the barrel.

Preferably the adaptor assembly is adapted for accommodating 400g lubricant cartridges having a first diameter or 500g lubricant cartridges having a second and larger diameter in respective barrels. The lubricant cartridges may have diameters between 50mm and 61mm, optionally 51mm to 61mm, and optionally 52mm and 56mm.

Upon insertion of a relatively larger diameter barrel 40 into the frame 50, the clamping holders are displaced radially outwardly by the relatively larger barrel diameter (e.g. such as that used for e.g. a 500g lubricant cartridge). Thus the clamping holders are displaced against the biasing of the resilient biasing means. By contrast it would be appreciated that when the 400g lubricant cartridge and corresponding barrel are inserted, the clamping holders are into contact with the barrel.

Advantageously, the expansible adaptor assembly may be adapted to receive barrel with outer diameter between 57mm and 70mm, so that the barrel is dimensioned and selected for containing an inserted lubricant cartridge with size that matches the barrel size. By this way, a lubricant cartridge with specific diameter fits with a barrel with corresponding size.

As is known in the art, Hall sensors are typically arranged or disposed so as to measure the relative displacement of a corresponding magnet, and transform the detected displacement into a variable voltage signal.

Advantageously, in an embodiment of the lubricating device according to the present disclosure, Hall sensors 70a, 70b are received in corresponding recesses defined in each frame portion 50a, 50b. Magnet 72a, and magnet 72b are advantageously supported on the clamping holders 60a, 60b and received in a groove or recess formed on the displaceable clamping holder.

In the embodiment depicted, there are two magnets and two Hall sensors. However, it would be appreciated that a single magnet and corresponding Hall sensor would also potentially provide similar information, although two pairs provide more certainty/accuracy. It would also be appreciated that three or four pairs of magnet/Hall sensors could also be utilised without departing from the present disclosure.

The Hall sensors 70a, 70b are connected with the control circuit board 110 by wires (not shown. In the arrangement described the Hall sensors 70a, 70b detect the displacement of magnet 72a, 72b supported on the clamping holders by the barrel 40 in a radially outward direction. This enables the calculation of the volume of lubrication expelled using the detected Hall signal and barrel diameter determined, and the measured duration of operation of the pump 100.

Motor 80 is supported in the space defined in both clamshell housing portions 20a, 20b, and is attached to governor 82. The governor 82 is a two-stage speed regulating gearbox responsible for mechanical speed regulation. The output speed of the motor 80 is regulated through adjustment of the gear meshing ratio of the governor 82, thereby changing the speed the lubrication grease is expelled. For example, the volume of lubrication grease expelled may be 30g under the first regulated motor speed, and 60g under the second regulated motor speed. The volume can be adapted by this way according to the user requirements and actuation of the motor controls.

The gearbox assembly 84 is shown to be supported on the head 90 of the lubricating device 10. The head 90 has a vent valve 120 by which air may be released from the piston assembly and or the end of the cartridge for ease of application.

Advantageously, the piston assembly 100 may support a magnet 102, such that reciprocation of the piston moves the magnet to interact with a Hall sensor 104. This Hall sensor 104 is connected to the main control board 110, and can be used to monitor the actuation of the piston 100, the reciprocation of this being used to determine by the controller the amount of lubricant dispensed.

The piston assembly 100 is arranged to be driven by the gearbox assembly 84 to reciprocate and pressurise lubricant contained therein, expelling it into the attached flexible hose 32 and out the nozzle 30. A plug (not shown) may be received by the head at the base of the piston to allow for cleaning or the like. Advantageously, the gearbox assembly 84 may be provided with a crank flange assembly (not shown) including a crank flange and a yoke, which, together with the piston assembly 100, comprises a crank slider mechanism. As is known in the art, the crank slider mechanism converts the circular motion of the crank flange and the yoke into reciprocating motion of the piston assembly. When the crank flange is rotated and reaches the top position (12 o'clock position), negative pressure is formed in the head 90 of the lubricating device 10, drawing the lubricant into the head 90. When the crank flange is rotated to the bottom position (6 o'clock position), the piston assembly forces the lubricant toward the nozzle 30 under pressure and thereby into the hose 32 for dispensing.

A check valve is provided between the head 90 and the nozzle 30 to prevent the lubricant from flowing backwards. Through the rapid reciprocating movement of the crank slider mechanism within the head 90 of the lubricating device 10, the lubricant is expelled towards the nozzle 30.

The yoke of the crank slider mechanism is driven by the crank flange during rotary motion of the crank flange. The yoke may be further provided with a sensor with magnet for monitoring the times of the rotation motion of the crank flange (and the yoke) for the purpose of calculation and controlling and the volume of the lubricant being dispensed.

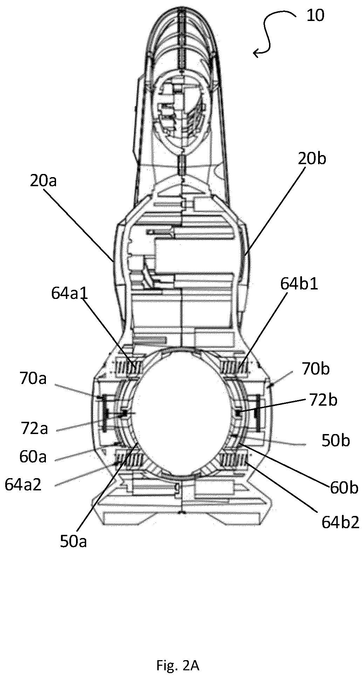

Referring to Figure 2A, there is depicted an exemplary cross section view taken through a plane substantially parallel to the plane of the battery receiving assembly 28 as in Fig 1A.

Surfaces of the left clamshell housing portion 20a and right clam shell housing portion 20b urge resilient biasing means 64a1, 64a2, 64b1, 64b2 against the frame portions 50a, 50b.

Hall sensors 70a, 70b are supported inside left clamshell housing portion 20a and right clam shell housing portion 20b respectively. Magnets 72a, 72b are supported on the frame portions 50a, 50b facing the corresponding Hall sensors 70a, 70b in radial directions respectively, such that movement of the frame portions in a direction of radially outward will move the magnets relative to the corresponding Hall sensor. In this way, the insertion of a larger size barrel may be detected.

Referring now to Figure 2B and Figure 2C, there is depicted an exemplary perspective view of the adaptor assembly 58 including the frame 50 and other components. As depicted, the frame 50 comprises frame portions 50a, 50b, in which slots 52 are defined. These slots 52 receive the clamping holders 60a, 60b. Bosses 62a, 62b extend outwardly from the clamping holders 60a, 60b to receive resilient biasing means 64a1, 64a2. Hall sensor 70A, 70B and magnets 72a, 72b with which they interact can be seen especially in Figure 2C.

It can be appreciated that at least one set of Hall sensor 70A and corresponding magnet 72A is required to implement the detection function. Two or more sets of Hall sensor and corresponding magnet may also be used.

In any event, for each set the relative positions are selected so that the movement of the clamping portions radially outwardly relative to the central axis of the barrel (and the cartridge) will also move or displace the magnet relative to the corresponding Hall sensor to provide the detection of the barrel inserted.

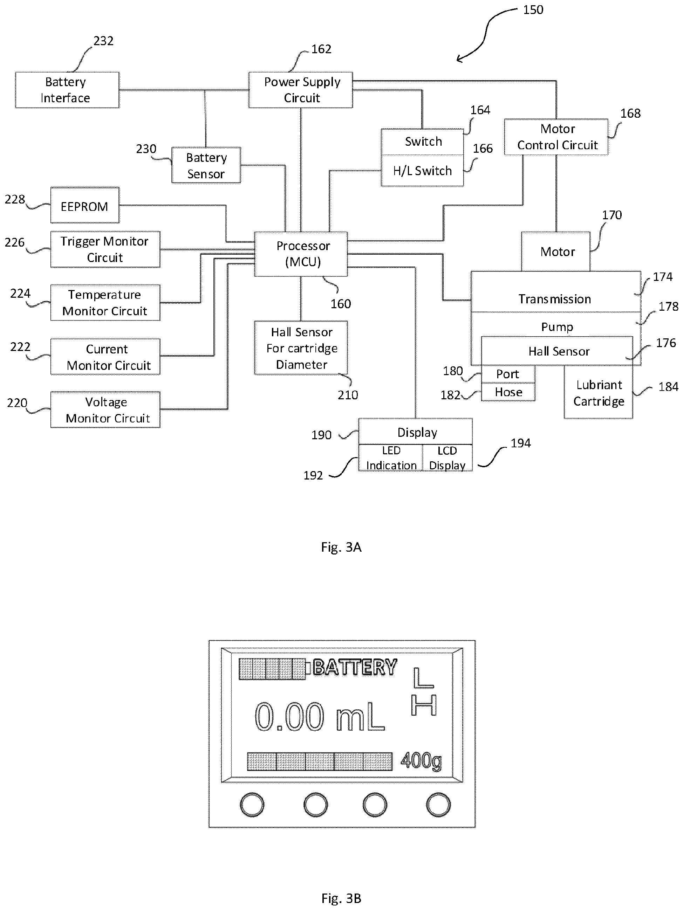

Fig 3A depicts an exemplary schematic diagram 150 showing the connections between the major components of the handheld lubrication device depicted in Figs 1A-1C.

As depicted, the processor 160 of the main PCB (printed circuit board) 110 is in communication with a power supply circuit 162 which is operated by user actuation of a trigger switch 164 and modified using speed selection switch 166.

A motor control circuit 168 controls the operation of motor 170 and transmission 174 (via gear housing). A Hall sensor and corresponding magnet monitor the operation of the yoke of the pump 178, which is connected to the nozzle or port 180 via an optional hose 182. Operation of the pump 178 urges the lubricant from the cartridge in a dispensing operation as described herein.

The display 190 may be in communication with the controller to provide information to the user. Optionally an LED indication means 192 may be provided on the housing provide visual feedback to the user of operation of the device as an alternative to or in addition to the display. One or more Hall sensors 210 as described herein may be coupled to the processor to provide for detection of the barrel size and determination of the cartridge diameter.

Optionally, the processor 160 may be in communication with a voltage monitor circuit 220, a current monitor circuit 222, a temperature monitor circuit 224 and a trigger monitor circuit 226 and may further be in communication with a EEPROM 228. Finally, a battery sensor 230 may provide information in the state of a battery attached via the battery interface 232.

In an optional embodiment, a display 190 such as that depicted in Fig 3B may be provided on the housing of the lubricating device. Optionally the display may provide information such as the power or current remaining of a power source coupled thereto, speed, amount of lubricant dispensed (based upon detected operation and volume of the piston) the volume of lubricant remaining in the cartridge after operation of the pump and the type of cartridge inserted in device and/or the speed of pump operation.

It would be appreciated that these parameters are exemplary and other parameters without limitation could also be displayed. The mode of operation for example continuous dispensing or predetermined volume dispensing also be displayed on the screen.

The powered lubricant dispensing device of the present disclosure provides a convenient and adaptable lubricant dispensing system. Advantageously, the device is configured to accommodate lubricant cartridges of varying diameter contained in the barrels via the displaceable clamping holders on the frame. Optionally, the relative displacement of the displaceable clamping holder(s) on the frame may be monitored by the use of Hall sensors determining the relative movement of a provided magnet relative to the frame. This means that the lubricant dispensing device can retain different diameter cartridges from different manufacturers or for different use, which enhances the convenience and usefulness in operation.

In addition, the powered lubricant dispensing device of the present disclosure is able to monitor and control the volume of lubricant to be expelled, and these settings are visible to the user via interface such as a display console.

Furthermore, the different sizes of the grease cartridge contained in the barrels can be detected and determined with the powered lubricant dispensing device of the present disclosure.

Advantageously, the powered lubricant dispensing device of the present disclosure provides the ability to regulate the operation speed by electronic means in addition to the mechanical control speed, the range of adjustment of the motor speed, i.e. the adjustment of the volume of the lubricant being dispensed is therefore much more flexible and easier to customise compared to the conventional design which relies only upon regulation of mechanical speed.

The above embodiments are described by way of example only. Many variations are possible without departing from the scope of the disclosure as defined in the appended claims.

For clarity of explanation, in some instances the present technology may be presented as including individual functional blocks including functional blocks comprising devices, device components, steps or routines in a method embodied in software, or combinations of hardware and software.

Methods according to the above-described examples can be implemented using computer-executable instructions that are stored or otherwise available from computer readable media. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, Universal Serial Bus (USB) devices provided with non-volatile memory, networked storage devices, and so on.

Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A handheld lubricant dispensing device comprising:
a housing having a power source and configured for retaining an inserted lubricant cartridge;
a pump configured for coupling with the inserted lubricant cartridge and driven by an electric motor for expelling lubricant therefrom,
a controller for providing current to the electric motor from the power source upon actuation of a switch by an operator for driving the pump to expel lubricant from the inserted lubricant cartridge,
wherein the housing retains an inserted cartridge via an adaptor assembly comprising a frame with at least one pair of displaceable clamping holders supported thereon a barrel containing at least an inserted lubricant cartridge of a first diameter or an inserted lubricant cartridge of a second and different diameter.

2. **The** handheld lubricant dispensing device according to claim 1 or 12, wherein the at least one pair of displaceable clamping holders are urged by one or more biasing means against the barrel upon insertion thereof into the housing, wherein the one or more biasing means are preferably compressible springs which are received in corresponding bosses extending radially outwardly from the displaceable clamping bodies.

3. **The** handheld lubricant dispensing device according to either claim 1 or claim 2, wherein the power source housing is releasably coupled thereto and comprises one or more battery cells.

4. **The** handheld lubricant dispensing device according to any one of the preceding claims, wherein the expansible adaptor assembly is adapted to receive barrel with outer diameter between 57mm and 70mm.

5. The handheld lubricant dispensing device according to any one of the preceding claims and/or claim 12 and/or claim 13, wherein the barrel contains inserted lubricant cartridges with diameters between 50mm and 61mm, optionally 51mm to 61mm, and optionally 52mm and 56mm.

6. The handheld lubricant dispensing device according to any one of the preceding claims and/or claim 12, and/or claim 13, wherein the expansible adaptor assembly is adapted for receiving a barrel dimensioned to retain a 400g lubricant cartridges having a first diameter or a barrel dimensioned to retain a 500g lubricant cartridges having a second and larger diameter.

7. The handheld lubricant dispensing device according to any one of the preceding claims , wherein the adaptor assembly includes at least one magnet disposed on or in the clamping holder and at least one Hall sensor disposed on the frame for providing a Hall signal indicative of movement by an inserted lubricant cartridge of the magnet disposed on or in the displaceable clamping holder relative to the frame.

8. The handheld lubricant dispensing device according to claim 8, wherein either or both of:
a) the Hall sensor board is fixed inside the frame, and the magnet is received in a groove on the displaceable clamping holder; and/or
b) the at least one Hall sensor is coupled to the controller for determining the cartridge diameter.

9. The handheld lubricant dispensing device according to any of the above claims, further comprising a crank slider mechanism, wherein at least a further Hall sensor is disposed so as to receive the signal generated by a magnet on the crank slider mechanism upon rotation thereof.

10. The handheld lubricant dispensing device according to any of the above claims, further including a display coupled to the processor for indicating any one or more of the power or current remaining of a power source coupled thereto, the volume of lubricant remaining in the cartridge after operation of the pump, the volume of lubrication expelled and/or the speed of pump operation.

11. The handheld lubricant dispensing device according to claim 10, wherein the display includes one or more user actuable controls mounted adjacent thereto, wherein said controls receive operator input for communication to the processor for work mode switching, volume setting of lubrication to be expelled and/or speed changing of pump operation, wherein preferably the work mode is selected from a mode in which grease is expelled upon manual actuation of a trigger, a continuously expelling mode and an expelling mode which is configured to cease once a predetermined volume of lubricant has been dispensed.

12. An adaptor assembly configured for retention within a housing of a handheld lubricant dispensing device, in particular the handheld lubricant dispensing device according to any one of the above claims, wherein said adaptor assembly is a frame with at least one pair of displaceable clamping holders supported thereon a barrel for containing at least an inserted lubricant cartridge of a first diameter or an inserted lubricant cartridge of a second and different diameter.

13. The adaptor assembly according to claim 12, configured for receiving barrel with outer diameter between 57mm and 70mm.

14. The adaptor assembly according to either one of claims 12 and 13, wherein the adaptor assembly has at least one magnet disposed on or in the clamping holder and at least one Hall sensor disposed on the frame for providing a Hall signal, such that said Hall signal indicates movement of the magnet disposed on or in the displaceable clamping holder relative to the frame by an inserted lubricant cartridge, wherein the at least one Hall sensor is preferably coupled to the controller for determining the cartridge diameter.

15. A kit comprising the adapter assembly according to any one of claims 12 to 14 and the handheld lubricant dispensing device according to any one of claims 1 to 11.
